# EUROPEAN PATENT APPLICATION

(11) **EP 3 819 625 A1**
(43) Date of publication of application: **12.05.2021**
(21) Application number: 20205584.4
(22) Date of filing: 04.11.2020
(51) Int. Cl.: G01N 1/20

(54) **AN APPARATUS FOR TAKING A PARTICLE SAMPLE, AND A METHOD OF USING THE APPARATUS**

(30) Priority: 05.11.2019 DK BA201900087 U; 21.02.2020 DK PA202070105
(71) Applicant: SCANGRADING ApS, 4990 Sakskøbing (DK)
(72) Inventor: EGHOLM, Janus, 3520 Farum (DK)
(74) Representative: Holme Patent A/S

(57) **Abstract**

An apparatus (A) serves for taking a particle sample from a particle stream (PS) flowing through a pipe. Said apparatus (A) comprises a sampling unit (4;4') arranged to take a sample from the particle stream (PS), a reciprocating unit adapted to move the sampling unit (4;4'), a flow-through unit (2) configured to replace a section of the pipe in alignment with said pipe, and the reciprocating unit is configured to move the sampling unit (4;4') in and out of the flow-through unit (2) at constant velocity to reciprocatingly.

## Description

The present invention relates to an apparatus for taking a particle sample from a particle stream flowing through a pipe, said apparatus comprises a sampling unit arranged to take a sample from the particle stream, and a reciprocating unit adapted to move the sampling unit.

In particular the present invention relates to an apparatus for taking a representative sample of small particles, such as castor sugar and other sugars having other grain sizes, such as pearl sugar. However within the scope of the present invention the apparatus can be used for taking representative samples from streams of any kind of particulate matter, including but not limited to rice, seeds, grains, coffee, fertilizers, pearls, and e.g. peas. More particular the present invention relates to taking a sample from a continuous particle stream in free fall in a pipe.

In many industrial productions, such as in the exemplary sugar production, the distribution of grain size is an important parameter to keep under observation to get the consumer product right. To monitor the production to keep the right grain size of the particles during the production period, representative particle samples must be taken frequently.

There are many known different methods of taking such samples. The most common method to take a sample from a particle stream in free fall is that somewhere in the pipe, there is an access hole, which is closed during production, but can be opened when a sample is to be taken. A probe with a slit in the periphery or other opening is inserted into the particle stream so that the portion of the particles in the particle stream which strikes the slit or opening constitutes the sample.

Such methods are known from e.g. German patent application no. DE 102010010789 A1. This known apparatus includes taking powder or granulate samples from a stream of coal particles in free fall in a pipe. The sampling unit has a cup coupled to a reciprocating and rotating unit. On the one hand the reciprocating unit pushes the cup inside the pipe via a side opening. The cup is held in the particle stream in same position for about a second where after the cup is withdrawn and emptied by the reciprocation unit rotating the cup.

The inventor of the present invention has observed that particles in free fall in a pipe tend to be in highest concentration in the centre of the pipe. So the particle concentration is denser closest to the central axis of the pipe than along the pipe wall. Thus the problem is to take not just a sample, but a sample being representative across the cross section of a particle stream, and especially when taken a sample from a continuous particle stream falling freely in a pipe. When there are particles of different sizes in the particle stream, the particle distribution is not homogeneous, nor uniform.

One problem with the above known methods is that because the collected particles are not taken over the full cross section of the particle stream, the sample has an overrepresentation of the particles in the pipe section where the sample is taken, e.g. where the cup of DE 102010010789 is held. In DE 102010010789 the sampling unit is designed to be moved quickly in and out of the conventional access hole. The sampling unit is held in fixed position abutting the pipe wall to take a particle sample from the particle stream. During taking a sample the sampling unit extends from the pipe wall a small distance beyond the pipe axis, and it cannot be moved further along the pipe diameter to the sides or traverse the pipe sectional area. Thus it is impossible to take a sample from a full cross-sectional area of the particle stream to take a true, authentic sample, thus a representative sample, which is so essential to constantly monitor the product.

To obtain a highly representative sample, it is important to collect particles from the entire pipe cross section when sampling, so that also particles falling closer to the pipe wall make a contribution to the sample.

In products such as sugar, there is always a certain amount of very small particles relative to the average size of the particle stream, and the location of these small particles in the sugar particle stream will typically be greatly influenced by air currents in the pipe, and as this factor is not known and varies depending amongst others on the velocity of the particle stream, it is entirely crucial for the representative value of the particle sample that the particle sample can be taken from the full cross section of the particle stream.

Within the context of the present invention a "representative sample" is a sample that has a high probability of the particle distribution in the sample corresponding to that of the overall particle stream. Thus "a representative sample" is indicative of the particle distribution in the actual particle stream wherefrom the sample is taken, in particular in terms of particle size and particle distribution. The probability of similarity between particle distribution in sample and particle stream may according to the present invention be at least 95% or even higher.

Within the context of the present invention the terms "reciprocating" means the ability to perform at least one stroke or travel of the sampling unit in and out again of the flow-through unit in at least one sampling cycle. The "reciprocating unit" of the present invention can perform as many sample cycles as desired at similar or different frequencies and time intervals. The sampling cycling frequency is a production decision.

Within the context of the present invention the term "flow-through" and "flow-through unit" means that the particle passes through the pipe or the flow-through unit inserted in the pipe, preferably coaxially with the pipe, without particles being stored or pile in the pipe or flow-through unit. The pipe can have any cross sectional area including but not limited to circular, square, oval, polygonal, etc.

In view of the foregoing, the main aspect of the present invention is to provide an apparatus capable of taking a particle sample from a particle stream, which sample has a highly reliable representation of the particles in the actual.

In another aspect the present invention provides a build-in inline apparatus for taking a representative particle sample from a particle stream.

In another aspect the present invention provides an apparatus for taking a particle sample that is representative of a stream of small particles.

In another aspect the present invention provides an apparatus for taking a representative particle sample from a continuous stream of freely falling particles.

In another aspect the present invention provides an apparatus that can be operated automatically at regular or programmed intervals intervals.

The novel and unique features and ways whereby these and other aspects are achieved consist in that the apparatus further comprises
- a flow-through unit configured to replace a section of the pipe in alignment with said pipe, and
- the reciprocating unit is configured to move the sampling unit in and out of the flow-through unit at constant velocity to reciprocatingly traverse the cross-section of the particle stream.

When manufacturing particulate matter the composition of the particle stream must be frequently controlled and monitored to instantly reveal deviations from set values and performance criteria, thereby being able to take instant action and make countermeasures and adjust the manufacturing process. Such frequent control can e.g. be done by taking frequent particle samples and analyzing said samples.

The apparatus of the present is designed such that the sampling unit, under the control of the computer, automatically is passed through the particle stream at constant velocity over the full cross section of the flow-through unit that is inserted in the pipe to replace a flow section of the pipe. The constant velocity eliminates and/or balances the impact and radial force of the front face of the sampling unit on the falling particles of the particle stream, so that they are affected equally by the moving sampling unit.

The sampling unit can move at constant velocity to traverse over the full cross section of the particle stream, whereby all sectors of the particle stream makes a contribution to the particle sample, including particle contributions from the areas close to the pipe wall, resulting in obtaining a highly representative particle sample.

A representative particle sample can then be analyzed to provide information and data about the actual composition and parameters of the particles in the actual particle stream, in particular the size distribution of the particles. The apparatus of the present invention is a valuable part of the operational monitoring system.

The appropriate design of the sampling unit may be chosen in dependency of the size of the pipe, and thus of the flow-through-unit, that advantageously can be selected having the same flow diameter or cross sectional area as the pipe, as well as being chosen in accordance with the kind of particles in the particle stream to be sampled.

Generally for designs of sampling units of the present inventions is however that a sampling unit may comprise a lower sample collecting chamber in form of an elongate trough, which lower sample collecting chamber may extend into an upper sample collecting chamber, which upper sample collecting chamber has an upright upper chamber section in extension of the lower sample collecting chamber, which upright upper chamber section extends into an elongate tapering or rounded roof, which elongate tapering or rounded roof has a summit part with at least one sampling aperture.

Within the context of the present invention the terms "summit" and "summit part" means the highest point or part of the upper sample collecting chamber in relation to the lower sample collecting chamber.

The lower sample collecting chamber advantageously serves for storing the consecutively collected particles during the travel of the sampling unit across the particle stream when the reciprocating unit performs a stroke, which travel includes advancement and retraction of the sampling unit in and out of the particle stream. The volume of the lower sample collection chamber, and thus of the particle sample, is determined based on one or more of the parameters of the production process in consideration of parameters including the velocity of the particle stream down the pipe, the constant reciprocating velocity of the sampling unit, and knowledge of the particle size and particle distribution of the product. Frequent sampling can reveal deviations in e.g. particle size and particle distribution of the product.

The parameter data are uploaded to the computer to allow the computer to take control of the sampling process in view of said parameters, so that when the reciprocating unit performs a stroke in and out of the particle stream, the volume of particles in the sample is known, and such that said the volume of particles can be stored inside the lower sample collecting chamber. Preferably the volume of the sample taken during one sampling cycle during one stroke of the reciprocating unit is the same as the interior volume of the lower sample collecting chamber, so when all operational parameters of the particle stream and of the apparatus of the present invention is adjusted and set in consideration of each other the lower sample collecting chamber may end up full during a sampling cycle.

Other parameters to be considered when designing the apparatus of the present invention for a specific task and particle stream to obtain a representative particle sample is at least one of the value of the constant reciprocating velocity of the reciprocating rod, the size of the parts of the sampling unit, and the size of the at least one sampling aperture of the sampling unit, the kind of particles in the particle stream, the size of the particles in said particle stream, the diameter or cross sectional area of the pipe and the velocity of the particle stream.

A representative particle sample can easily be collected in the lower sample collecting chamber if the at least one sampling aperture is an elongate slot extending substantially the length of the summit part. This embodiment of the present invention is particular suited for collecting particles of many different shapes and sizes from particle streams.

In an alternative embodiment the at least one sampling aperture can be a plurality of spaced apart openings along the length of the summit part. This embodiment is particular suited for taking a sample from a stream of small particles, such as when taking samples of castor sugar.

The elongate tapering or rounded roof of the summit part advantageously makes the particles, that do no hit the at least one sampling aperture, to bounce back into the particle stream thereby preventing that the at least one sampling aperture become blocked up.

It may be advantageously to make a test run or calibration process of the apparatus to determine the most appropriate size and kind of the at least one sampling aperture. To do that the best the at least one sampling aperture can be adjustable, or the sampling unit be a test sampling unit having an adjustable at least one sampling aperture, which test sampling unit is replaced with another sampling unit having the characteristics established during the test run or calibration process and established for taking a representative particle sample from a given particle stream. During the test run or calibration process at least the reciprocating velocity of the sampling unit and the volume of the lower collecting chamber may be determined based on the minimum knowledge of the velocity of the particle stream and the type of particles. At the end of such running-in period the best sampling unit and the best process parameters have been established and can be implemented in real time sampling.

In order to facilitate emptying the sampling unit once a sampling cycle has been completed and the sampling unit has been retracted from the flow-through unit the upper sample collecting chamber can have at least one end opening at a gable end.

Preferably, the upper sample collecting chamber has an end opening at both opposite gable ends to allow pouring of particles from both of the opposite end openings.

The reciprocating unit may comprise a first housing for accommodating the sampling unit when said sampling unit is retracted from the flow-through unit. The first housing may be dimensioned to allow the sampling unit to rotate clockwise and/or counter clockwise, preferably between 90 - 180°, to let the particles collected inside the lower sample collecting chamber to leave the sampling unit via the at least one end opening at a gable end of the upper sample collecting chamber, and drop into the bottom section of the first housing due to gravity.

The particles may leave the first housing through a housing outlet after a temporary storage at the bottom of the first housing for further analysis or sub-sampling, or be taken out as a continuous stream for further analysis or sub-sampling.

In a particular preferred configuration of the first housing, said first housing can be configured with an upper housing part inside which the sampling unit can rotate and bottom section configured as a lower tapering housing part that facilitates emptying the first housing of the particle sample, which lower tapering housing part may have the housing outlet for exit of the particle sample for further analysis.

The reciprocating unit may further comprise a reciprocating rod having a first rod end secured to the sampling unit to move the sampling unit in and out of the flow-through unit. At a second rod end opposite the first rod end the reciprocating rod can be provided with a first coupling part, which may serve to couple to a second coupling part that is arranged at a distance corresponding to a stroke length of the reciprocating rod to interlock said first coupling part and said second coupling part to be able to rotate the reciprocating rod about its longitudinal axis by rotating the second coupling part, and thereby emptying the sampling unit of particles.

The reciprocating unit may have mechanical operation means, which mechanical operation means may comprise a first actuator means for performing the stroke of the reciprocating rod to move the sampling unit in and out of the flow-through unit.

The lower sample collecting chamber may have a bottom wall, opposite longitudinal side walls extending upright from opposite longitudinal edges of said bottom wall, opposite lower end walls extending upright from opposite short edges of said bottom wall, and at least one of the opposite lower end walls is at an angle of more than 90° in relation to the bottom wall to compensate for at least some of the angle of repose of the particles.

Within the context of the present invention the term "angle of repose" is understood in its most conventional sense as the steepest angle of descent or dip relative to the horizontal plane of piled-up particles, which horizontal plane in the sampling position are defined by the bottom wall of the lower sample collecting chamber, to which particles can be piled-up without slumping. At the angle of repose, the material on the slope face of a pile is on the verge of sliding.

Preferably both of the opposite lower end walls of the lower collecting chamber can be at an angle of more than 90° in relation to the bottom wall so that the angle of repose is compensated at both end openings of the lower collecting chamber.

In order to have an appropriate volume of the lower colleting chamber the at least one end opening of the upper sample collecting chamber may extend at least a distance from a free edge of the lower end wall towards the summit part, preferably until the beginning of the summit part, however the end opening may in some embodiments cover the complete gable end of the upper collecting chamber or just extend a part of the gable end of the summit part. In a preferred embodiment the at least one end opening may be provided at a free short end of the upright upper chamber section of the upper sample collecting chamber.

The majority of the flow path of a flow chamber of the flow-through unit may have an interior lumen diameter corresponding to that of the pipe. The flow-through unit may be configured to simply replace a section of the pipe, into which the flow-through unit is inserted, and constitutes a build-in inline pipe section. To avoid any landings and obstructions in the particle flow path the flow chamber of the flow-through unit may advantageously taper slightly at a lower flow section below the access hole.

The first housing can have a shutter opening provided in a front housing wall facing the flow-through unit and being configured for passage of the sampling unit, and a shutter for conveniently and easily closing the shutter opening between sampling actions during a sampling cycle and until a new sample cycle starts. When the sampling unit is retracted inside the first housing, it is in a parked position until the next sampling cycle. The first housing thus serves as a temporary, closed parking area for sampling unit during sampling action. When the sampling unit is parked and the shutter opening is closed by the shutter polluting and contaminating the particle sample is avoided. Particles from the particle stream cannot enter and the particle sample is confined and representative. Also loosing particulate matter from the particle sample via the shutter opening is thereby avoided. Since the sampling is undertaken in a complete closed environment the representative value of the particle sample is under little or none negative influence. An analysis vial or container can even be coupled directly to the housing outlet.

The mechanical operation means of the reciprocating unit may comprises a second actuator means for operating the shutter to open and close the shutter opening.

The first actuator means that serves to perform a stroke of the reciprocating rod may be an electric actuator, preferably an electric motor, such as stepper motor or a servo motor. Electric actuators have very high levels of precision and may therefore be the preferred choice of actuator to keep the constant velocity for reciprocating the sampling unit by means of the reciprocating rod in and out of the flow-through unit. A further advantage is that the operating costs of electric actuators are low and they do not take up must space.

The second actuator means for opening and closing the shutter can be a pneumatic actuator. Furthermore, the reciprocating rod can rotate by means of a third actuator means, preferably also a pneumatic actuator. Pneumatic actuators provide more force than an electric actuator can do instantaneously, and are very economical when used to drive a small device as the opening and closing of the shutter and the rotation of the reciprocating rod.

The above examples of choice of actuator types should not be construed as limiting the present invention. The one or more of the first actuator means, the second actuator means and the third actuator means of the mechanical operating means of the reciprocating unit can be selected from any actuator means of the group of actuator means comprising a pneumatic actuator, a hydraulic actuator, or an electric actuator. The reciprocating unit may utilize any combinations of those. Preferably the actuator means are simple linear actuators.

The computer may control at least one of the velocity of the reciprocating rod, the rotation of the reciprocating rod, the frequency of sampling, opening and closing of the shutter opening, and emptying of the sampling unit.

The apparatus of the present invention may further comprise a second housing in extension of the first housing, which second housing accommodates at least the first coupling part, the second coupling part, the first actuator means, the second actuator means, a length of the reciprocating rod, and the computer, and shields said components from the environment.

Preferably, the second coupling part is mounted to the rear wall of the second housing opposite the first housing, in which embodiment the length of the second housing substantially corresponds to a stroke of the reciprocating rod.

Although the apparatus of the present invention is developed in view of taking samples of sugar particles from a continuous stream of sugar particle falling freely in a pipe due to gravity, its intended use is also for other kinds of particulate material. Also the velocity of the particle stream and of the individual particles in the particle stream wherefrom the particle sample is to be taken may be influenced by a pressure, e.g. suction.

The invention further concerns an apparatus as discussed above for use in a sub-sampling apparatus, wherein the first housing outlet of a first housing of a first apparatus described and defined above is in fluid communication with an inlet of a flow-through unit of a second apparatus described and defined above, or in fluid communication with any other device adapted to take a sub-sample from the sample taken by the first apparatus.

The invention further relates to a method of performing a sampling cycle using the apparatus described and defined above. The method comprises the cycle of steps a) - f) performed under control of the computer when the flow-through unit of the apparatus have been inserted in a section of a pipe, inside which a particle stream is streaming, preferably streaming in a vertical direction due to gravity and being a continuously particle stream.

The sampling steps comprised the following sequence of step:
a) the computer provides a first shutter command to the second actuator means to make the shutter open the shutter opening to obtain access to the flow through-unit,
b) the computer provides a reciprocating command to the first actuator means to make a first stroke part to reciprocate the sampling unit at constant velocity out of the first housing, crosswise the particle stream, and a second stroke part back again, crosswise the particle stream, inside the first housing,
c) the computer provides a second shutter command to the second actuator means to close the shutter opening by means of the shutter,
d) the first coupling part and the second coupling part couple together in common rotationally interlocking relationship, optionally triggered by a coupling command issued by the computer to the second actuator means,
e) the computer provides a first rotation command to the third actuator means to rotate the reciprocating rod to empty the sampling unit into the first housing,
f) the computer provides a second rotation command to the third actuator means to reverse or repeat the rotation of step e), and optionally
g) repeating steps a) - f) after a pretermined stand-by period, which is known to the computer, has elapsed.

The power to the first actutor may advantageously be shut off during sampling cycles to reduce generation of heat and save power costs.

To make sure that the reciprocating rod at all times is kept in the correct intended position to drive at constant velocity and in steady state during a reciprocation in and out of the flow-through unit, the reciprocating rod may be guided by a guidance means inside the second housing, such as, but not limited to, a guideway, or the reciprocating rod may have axially spaced apart guide webs for sliding on, or in, guide tracks or guide rals extending lengthwise of the second housing. This embodiment of an apparatus according to the present invention is very robust and little vulnerable to influences from the enviroments, including from the particle transport process itself.

The invention will now be described in further details with references to the accompanying drawing in which
fig.1. is a principle sketch, seen in a schematic top view, of an embodiment of the apparatus, where the flow-through unit is inserted in a pipe in which a particle stream is flowing, and where the apparatus is in its parked position ready for taking a sample,
fig. 2 shows the same from the side,
fig. 3 shows the same side view as in fig. 2 but with the sampling unit in the position wherein it has performed the first stroke part of step b) of a sampling cycle,
fig. 4 shows the same side view as in fig. 2 but with the sampling unit in the position wherein it has performed the second stroke part of step b) where the sampling unit has been retracted again from the particle stream inside the first housing and the shutter has been dropped down in accordance with step c),
fig. 5 shows seen from the side step e) of the emptying of the sampling unit, which has been rotated 90° to discharge the particle sample for further processing,
fig. 6 is a perspective view of an embodiment of an apparatus of the present invention invention, seen from the flow-through-unit slightly from above and from the side,
fig. 7 is a sectional view taken along line VI-VI in fig. 5,
fig. 8 shows in an enlarged scale view, of the fragment of the rear end of the section of the apparatus seen fig. 7,
fig. 9 is a perspective view of a first embodiment of a sampling unit for the apparatus of the present invention seen from the side,
fig. 10 shows the same in perspective view slightly from above and from the short end,
fig. 11 is a sectional view taken along line IX - IX in fig. 9, and
fig. 12 is a perspective view of a second embodiment of a sampling unit of the present invention seen from the side.

Below the apparatus of the present invention is described by way of example in relation to taking sugar particle samples. Other kinds of particles streams can be sample in same manner using the apparatus of the present invention.

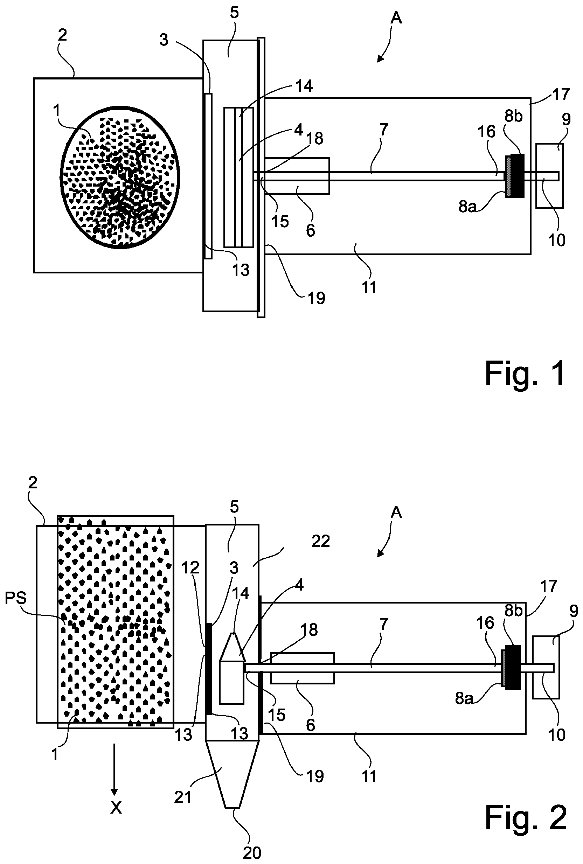

Emphasis is also made that the particle distribution in the pipe is shown in schematic form in figs. 1 - 5. The shown particle distribution may differ depending on amongst others the kind of particles, the pipe, and the velocity of the particles stream. Purely for the purpose of illustrative overview no sources, tubes, cables and other connections for electricity and pneumatics are shown. Such means can be provided at any appropriate location of and in relation to the apparatus, and be of any conventional kind.

The sampling method of using an apparatus A is schematically shown in the principle sketches of figs. 1 - 5, where the apparatus A is used to take a representative sample 12 of sugar particles 1 in a sugar particle stream PS. The sugar particles 1 are falling freely, down through a flow-through unit 2 solely due to gravity, as indicated by arrow X in fig. 2. The flow-through unit 2 is in openable and closeable communication with a first housing 5. To that aspect the flow-through unit 2 has an access hole 12 aligned with a shutter opening 13 of the first housing 5, which alignment provides the required fluid communication between the flow-through unit 2 and the first housing when the shutter is opened in step a) for conducting a reciprocating stroke b) of a sampling unit 4 in and out of the particle stream PS at constant speed.

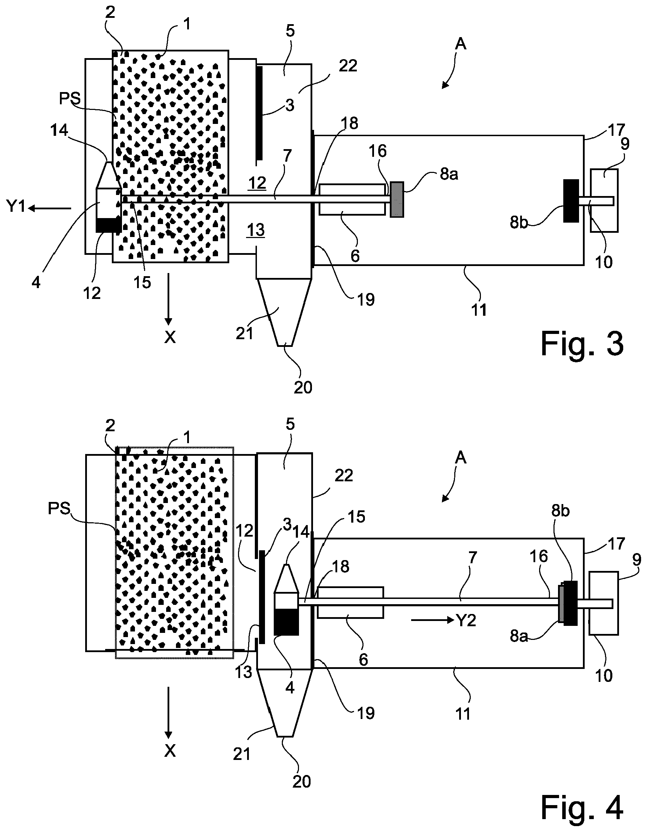

In fig. 2 the sampling unit 4 is in its parked position inside the first housing 5. To start a reciprocating cycle a shutter 3 for the shutter opening 13 can be operated by a second actuator means in form of a pneumatic linear actuator (not shown in figs. 1 - 5) accommodated in the first housing 5 to perform step a) to open, as seen in fig. 3, and perform step c) to close, as seen in fig. 4, said shutter opening 13, and thus also open and close for access to the flow-through unit 2 via the access hole 12. In some embodiments the flow-through unit 2 and the first housing can have a common wall, in which case the shutter opening 13 and the access hole 12 are the same.

Once the shutter 3 has opened for access to the flow-through unit 2, a first actuator means in form of an electric actuator 6 performs the first stroke part of step b) and moves a reciprocating rod 7, which has the sampling unit 4 mounted to a first rod end 15, forward into the particle stream PS at constant velocity under the control of a computer program on a computer (not shown), whereby particles 1 drops through the elongate slot 14 at the top of the sampling unit 4, which elongate slot represents the at least one sampling aperture 14.

As seen best in fig. 3 the sampling unit 4 is moved in the direction indicated by the arrow Y1 by the electric actuator 6 at a constant velocity from the parked position seen in fig. 2 fully across the cross-sectional area of the particle stream PS, where after the sampling unit 4 performs the second stroke part of step b) and is returned by the electric actuator 6 at the same constant velocity to be positioned inside the first housing 5 full of collected particles 1, as shown in fig. 4, and as indicated by arrow Y2, which collected particles 1 constitutes a representative sample due to the constant velocity of the sampling unit 4 and due to said sampling unit 4 collects particle from the complete cross section of the particle stream. During this reciprocating cycle of step b) the sampling unit 4 moves in and out of the flow-through unit 2 and collects a sample 12 of sugar particles 1. The first half of the sampling cycle shown in fig. 2 collects the first half of the particle sample, as illustrated by the small black box at the bottom of the sampling unit 4. The second half of the sampling cycle shown in fig. 3 collects the second half of the particle sample as illustrated by the twice as large black box at the bottom of the sampling unit 4 in fig. 4.

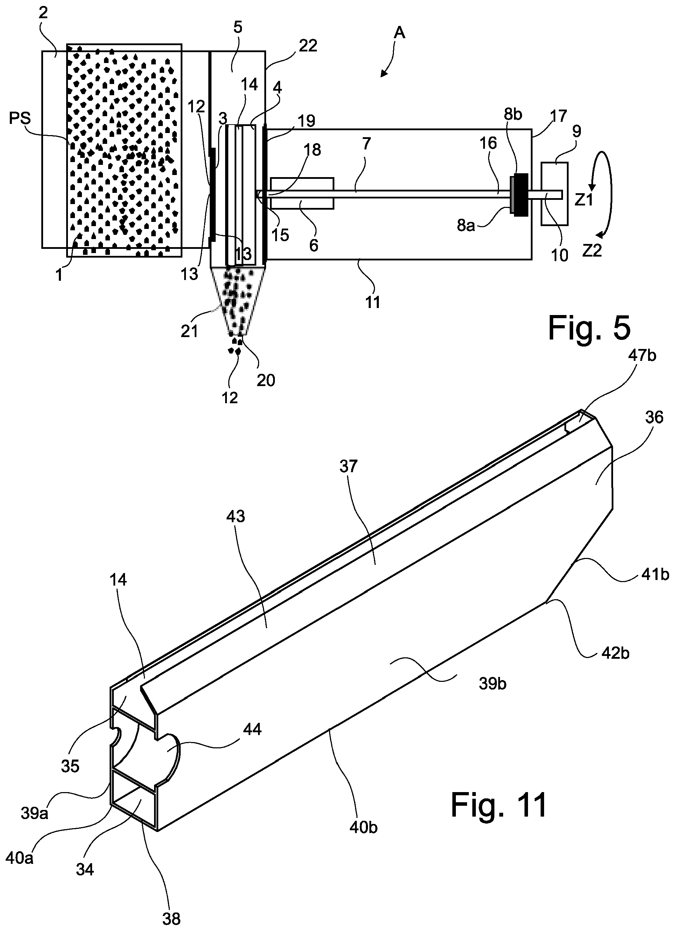

Then second rod end 16 opposite the first rod end 15 of the reciprocating rod 7 carries a first coupling part 8a. The first coupling part is configured to couple to a second coupling part 8b mounted to a rear wall 17 of a second housing 11 that surrounds and accommodates at least the reciprocating rod 7, the first electric actuator 6 for operating the reciprocating rod 7, as well as the computer (not shown). The reciprocating rod 7 extends reciprocatingly into the first housing 5 via a rod hole 18 in a front wall 19 of the second housing 11, which front wall 19 is also the rear wall 19 of the first housing 5. Once the sampling unit 4 has returned inside the first housing 5, the shutter 3 closes the shutter opening 13, and the first coupling part 8a and the second coupling part 8b is subject to step d) of interlocking to facilitate rotation of the reciprocating rod 7, and thus step e) of rotation of the sampling unit 4 to empty the collected sugar sample 12 out of the sampling unit 4, down into the first housing 5 and out of said first housing 5 via its housing outlet 20, as seen best in fig. 5. The housing outlet 20 is arranged in a lower tapering housing part 21 in extension of an upper housing part 22 inside which the flow-through unit 2 can rotate to empty the sampling unit 4 of collected particle sample 12 in step e).

The rotation of the reciprocating rod 7 can be performed clockwise or counter-clockwise, as indicated by arrows Z1,Z2 in fig. 5, by means of a third actuator means 9, in form of a rotation actuator, that has a rotation shaft 10 coupled to the second coupling part 8b. In the present embodiment rotation shaft 10 extends through the rear wall 17 of the second housing 11 so that the third actuator means 9 is arranged exterior to the second housing 11.

After emptying the sampling unit 4, said sampling unit 4 is rotated in step f) in opposite or same direction of the rotation direction of step e) to arrange the sampling unit 4 in the starting position seen in fig. 2, to repeat the sampling cycle after a set delay, as defined in step g). The delay and sampling cycle is under the control of the computer program on the computer to make regular sampling actions.

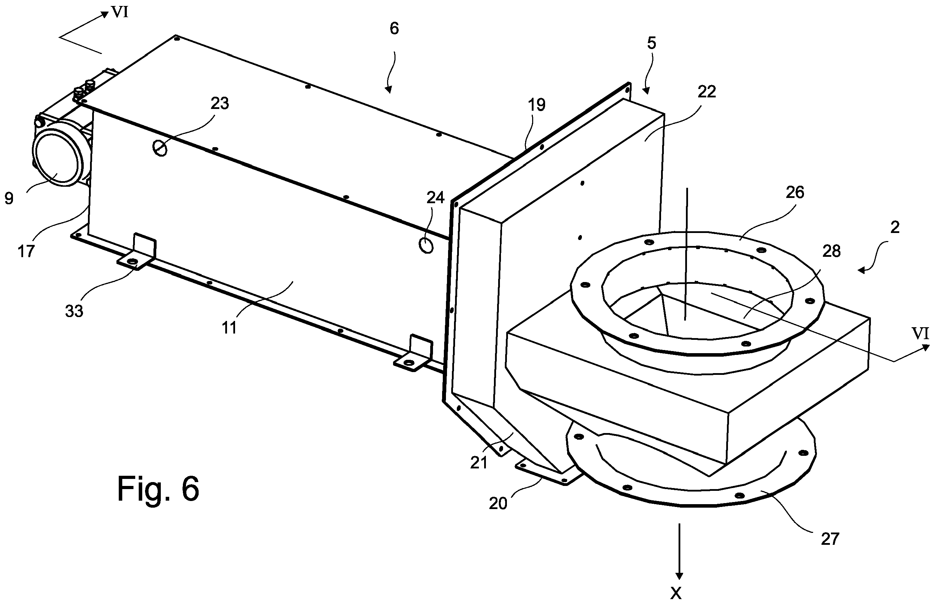

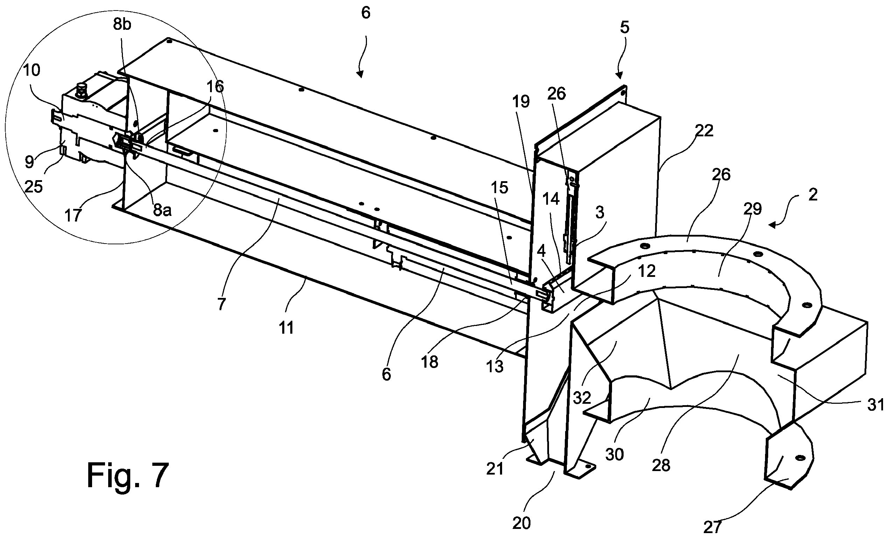

I fig. 6 is shown a perspective view of an embodiment of an apparatus 6 according to the present invention, and fig. 7 shows the same in lengthwise section view along line VI-VI of fig.6. This embodiment corresponds to the schematic embodiment of figs. 1 - 5, and for like parts same reference numerals are used. The second housing 11 has one or more electric plugs 23 for connecting to a source of electricity to drive the first actuator means 6, and one or more air connections 25 to couple to a source of pressurized air to drive the second actuator means 26 and the third actuator means 9, respectively, as described above. Furthermore the second housing can have one or more separate air connections to couple to the same or a different source of pressurized air to be supplied to the second housing to maintain an overpressure around electronic components inside said second housing. This overpressure prevents dust and particles from damaging the computer and other electronics inside the second housing. A pressure gauge monitors the overpressure and shut off the power to the apparatus in case the pressure inside the second housing gets below a set safety value.

The flow-through unit 4 has an upper flow section 29 with an upper flange 26. The upper flow section 29 extends, via a center sampling section 28, into a lower flow section 30 that has a lower flange 27. The flanges 26,27 facilitate sealed, preferably co-axial, insertion into a pipe (not shown). The upper flow section 29 and the lower flow section 30 have substantially the same interior diameter or cross sectional area as the pipe.

The center sampling section 28 has and upper sampling section 31 in which the access hole 12 is located for entry of the sampling unit 4. The upper sampling section 31 has an enlarged cross sectional area compared to the flow sections 29,30 to allow at least the at least one sampling aperture 14 of the sampling unit 4 to pass completely through the particle stream PS, as seen in fig. 3. The upper sampling section 31 extends into a lower sampling section 32 that serves to reduce the enlarged cross sectional area once again to that of the interior diameter of the pipe, thus to the diameter of the lower flow section 30.

As seen best in fig. 6 the second housing 11 has brackets 33 for securing the apparatus to a support (not shown) if needed. Such securing may be expedient to eliminate vibrations transmitted to the apparatus A from the pipe, and to reduce the impact on the apparatus A when the falling particles 1 continuously hit the sampling unit 4 provided at the first end 15 of the reciprocating rod 7.

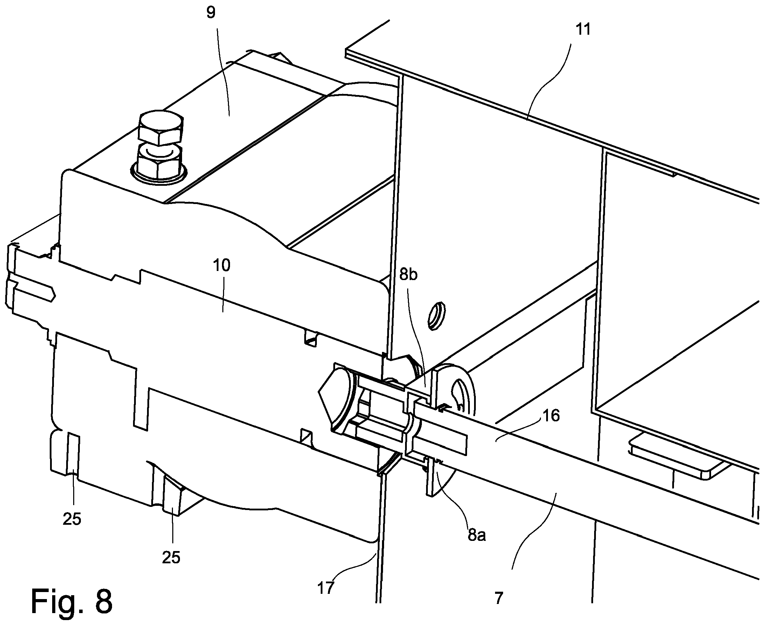

The enlarged scale sectional fragmentary view of fig. 8 shows the interlocking of the first coupling part 8a and the second coupling part 8b of step d) ready to perform step e) by the third actuator means, the rotation actuator 9, thereby rotating the rotation 4 shaft 10 having the second coupling part 8b at the end opposite the rotation actuator 9.

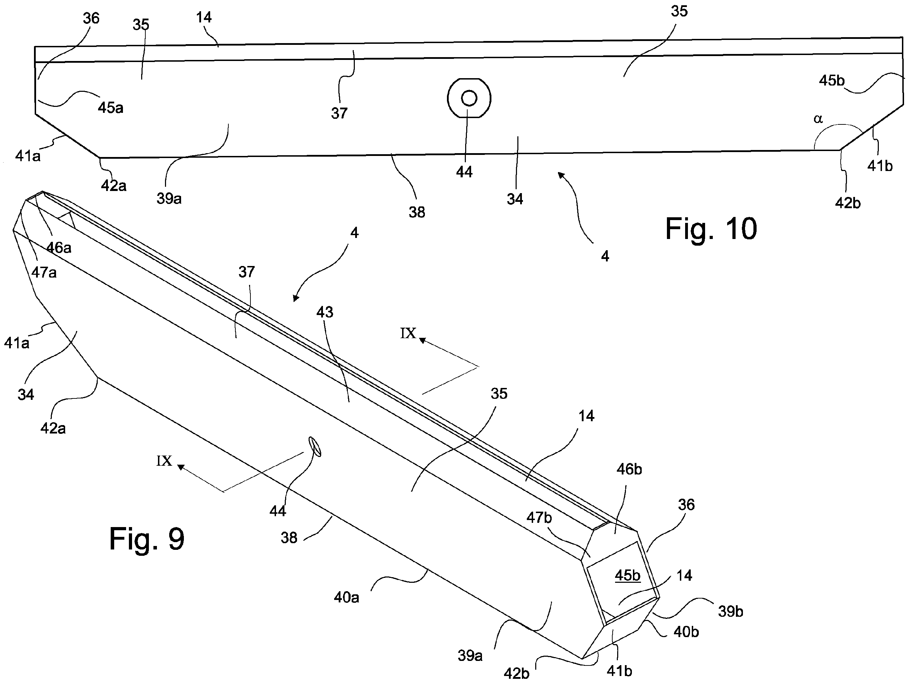

Fig. 9 shows a first embodiment of a sampling unit 4 having an elongate slot 14 that constitutes the at least one sampling aperture. Fig. 10 shows the same seen from the side, and fig. 11 is a view inside the sampling unit 4.

The sampling unit 4 has a lower sample collecting chamber 34 in form of an elongate trough 34, which lower sample collecting chamber 34 extends into an upper sample collecting chamber 35, which upper sample collecting chamber 35 has an upright upper chamber section 36 in extension of the lower sample collecting chamber 34, which upright upper chamber section 36 extends into an elongate tapering roof 37, which elongate tapering or rounded roof has a summit part 43 with the least one sampling aperture 14.

The lower sample collecting chamber 34 is delimited by a bottom wall 38, opposite longitudinal side walls 39a,39b extending upright from opposite longitudinal edges 40a,40b of said bottom wall 38, opposite lower end walls 41a,41b extending upright from opposite short edges 42a,42b of said bottom wall 38, and at least one of the opposite lower end walls 41a,41b is at an angle α of repose of particles of about 135° in relation to the bottom wall 38. A bearing 44 for mounting the first end 7 of the reciprocating rod 7 extends through one or both of longitudinal side walls 39a,39b. The upper sample collecting chamber 35 has end openings 45a,45b at opposite gable ends 46a,46b with opposite gable walls 47a,47b.

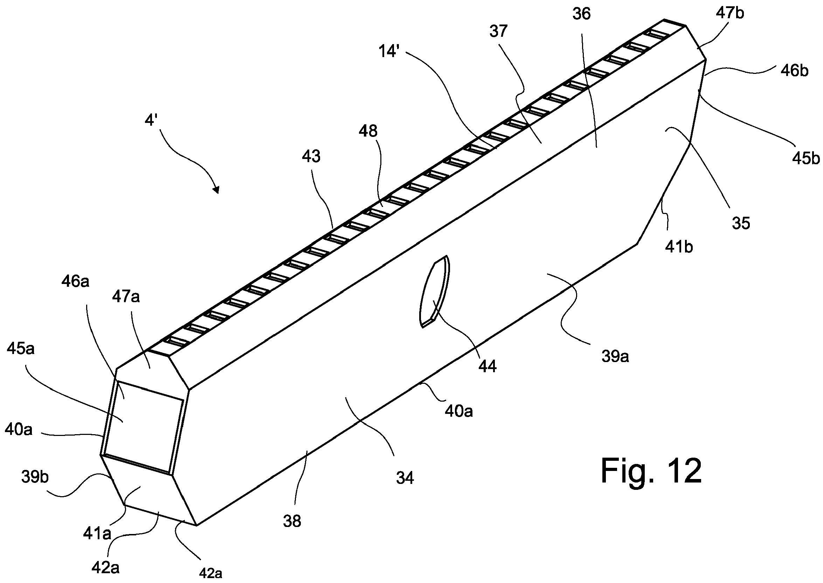

Fig. 12 is a perspective view of a second embodiment of a sampling unit 4' of the present invention seen from the side. The second embodiment of a sampling unit 4' only differs from the first embodiment of a sampling unit 4 in the modified at least one sampling aperture 14' which instead of a lengthwise extending slot consist of a plurality of spaced apart openings 48 in the summit part 43. Otherwise like parts are indicated by like reference numerals.

Typical slot width, or diameter of an opening of the spaced apart openings, of the at least one sampling aperture is 10 times the avarage particle diameter.

### Example of setting reciprocating velocity of sampling unit taking a sample of sugar particles from a stream of sugar

During calculations and calibrations to set the reciprocating velocity of the sampling unit in and out of the pipe, or setting the size of the at least one aperture, it will be assumed that the distribution of particle in the sugar particle stream is uniform throughout the entire cross sectional area of the pipe.

A sugar particle sample is to be taken from a stream of sugar particles flowing freely through a circular pipe with inner diameter 300mm at a velocity of 80tons/hour (22.2kg/sec.). The sampling unit is dimensioned to have upper and lower sample collecting chambers matching said pipe diameter. The cross sectional area of the pipe is 70686mm². Using a constant reciprocating velocity of the sampling unit of 0.5m/sec. during a stroke through the sugar particle stream places the sampling unit a total of about 1.2 seconds collecting time in the sugar particle stream.

During the collecting time the sampling unit is in the sugar stream 22.2 kg/s * 1.2sec = 26.7kg sugar passes through any cross section of the pipe. The fraction of sugar that constitutes the sugar particle sample during the collecting time is then 80g/26700g = 0,30%. A sugar particle sample of 80g requires that the size of the at least one aperture of the sampling unit is set to 0,30% * 70686 mm² = 212mm².

This can e.g. be achieved approximately by ten 5x5mm openings uniformly distributed along the length of the sampling unit.

This calculation can be reversed to calculate the reciprocating velocity of the sampling unit based on the size of the at least one aperture instead.

## Claims

**1.** An apparatus (A) for taking a particle sample from a particle stream (PS) flowing through a pipe, said apparatus (A) comprises
- a sampling unit (4; 4') arranged to take a sample from the particle stream (PS), and
- a reciprocating unit adapted to move the sampling unit (4;4'), **characterised in that** the apparatus (A) further comprises
- a flow-through unit (2) configured to replace a section of the pipe in alignment with said pipe, and
- the reciprocating unit is configured to move the sampling unit (4;4') in and out of the flow-through unit (2) at constant velocity to reciprocatingly.

**2.** An apparatus (A) according to claim 1, **characterised in that** the apparatus (A) has a computer configured with a computer program for controlling the operation of the apparatus (A).

**3.** An apparatus (A) according to claims 1 or 2, **characterised in that** the sampling unit (4;4') comprises a lower sample collecting chamber (34) in form of an elongate trough, which lower sample collecting chamber (34) extends into an upper sample collecting chamber (35), which upper sample collecting chamber (35) has an upright upper chamber section (36) in extension of the lower sample collecting chamber (34), which upright upper chamber section (36) extends into an elongate tapering or rounded roof , which elongate tapering or rounded roof (37) has a summit part (43) with at least one sampling aperture (14;14').

**4.** An apparatus (A) according to claim 3, **characterised in that** the at least one sampling aperture (14;14') has an elongate slot (14) extending the length of the summit part (43).

**5.** An apparatus (A) according to claims 3 or 4, **characterised in that** the at least one sampling aperture (14;14') has a plurality of spaced apart openings (48) along the length of the summit part (43).

**6.** An apparatus (A) according to any of claims 3, 4 or 5, **characterised in that** the size of the at least one sampling aperture (14;14') are adjustable.

**7.** An apparatus (A) according to any of the preceding claims 3 - 6, **characterised in that** the upper sample collecting chamber (35) has at least one end opening (45a;45b) at a gable end (46a;46b), preferably the upper sample collecting chamber (35) has an end opening (45a;45b) at both gable ends (46a;46b).

**8.** An apparatus (A) according to any of of the preceding claims 1 - 7, **characterised in that** the reciprocating unit comprises a first housing (5) for accommodating the sampling unit (4;4') when said sampling unit (4;4') is retracted from the flow-through unit (2), which first housing (5) is dimensioned to allow the sampling unit (4;4') to rotate clockwise and/or counter clockwise, preferably between 90 - 180°.

**9.** An apparatus (A) according to claim 8, **characterised in that** the first housing (5) has a housing outlet (20), preferably the first housing (5) has an upper housing part (22) inside which the flow-through unit (2) can rotate and a lower tapering housing part into which the particle sample can be emptied, which lower tapering housing part has the housing outlet (20) for exit of the particle sample.

**10.** An apparatus (A) according to any of of the preceding claims 1 - 9, **characterised in that** the reciprocating unit further comprises a reciprocating rod (7) having a first rod end (15) secured to the sampling unit (4;4') and an opposite second rod end (16) provided with a first coupling part (8a).

**11.** An apparatus (A) according to claim 10, **characterised in that** the apparatus (A) comprises a second coupling part (8b) arranged at a distance corresponding to a stroke length of a stroke of the reciprocating rod (7) and being adapted to lock together with the first coupling part (8a) to rotate the reciprocating rod (7) about its longitudinal axis by rotating the second coupling part (8b).

**12.** An apparatus (A) according to any of of the preceding claims 1 - 11, **characterised in that** the reciprocating unit further comprises a first actuator means (6) for performing the stroke of the reciprocating rod (7) to move the sampling unit (4;4') in and out of the flow-through unit (2).

**13.** An apparatus (A) according to any of of the preceding claims 3 - 12, **characterised in that** the lower sample collecting chamber (34) has
- a bottom wall (38),
- opposite longitudinal side walls (39a,39b) extending upright from opposite longitudinal edges (40a,40b) of said bottom wall (38),
- opposite lower end walls (41a,41b) extending upright from opposite short edges (42a,42b) of said bottom wall (38), and at least one of the opposite lower end walls (41a,41b) is at an angle (α) of repose of particles of more than 90° in relation to the bottom wall (38), preferably both of the opposite lower end walls (41a,41b) are at an angle of (α) of repose of more than 90° in relation to the bottom wall (38).

**14.** An apparatus (A) according to any of of the preceding claims 7 - 13, **characterised in that** the at least one end opening (45a,45b) of the upper sample collecting chamber (22) extends at least a distance from a free edge of the upright lower end wall (41a,41b) towards the summit part (43), preferably until the beginning of the summit part (43).

**15.** An apparatus (A) according to any of of the preceding claims 8 - 14, **characterised in that** the first housing (5) has a housing outlet (20), preferably the first housing (5) has an upper housing part (22) inside which the sampling unit (4;4') can rotate and a lower tapering housing part (21) into which the particle sample can be emptied, which lower tapering housing part (21) has the housing outlet (20) for exit of the particle sample.

**16.** An apparatus (A) according to any of the preceding claims 8 - 15, **characterised in that** the first housing (5) has
- a shutter opening (13) provided in a front housing wall facing the flow-through unit (2) and being configured for passage of the sampling unit (4;4'), and
- a shutter (3) for closing the shutter opening (13) between sampling actions.

**17.** An apparatus (A) according to claim 16, **characterised in that** the reciprocating unit further comprises a second actuator means (26) for operating the shutter (3) to open and close the shutter opening (13).

**18.** An apparatus (A) according to any of the preceding claims 12 - 17, **characterised in that** the first actuator means (6) is an electric actuator, preferably an electric motor.

**19.** An apparatus (A) according to claims 17 or 18, **characterised in that** the second actuator means (26) is a pneumatic actuator.

**20.** An apparatus (A) according to any of the preceding claims 1 - 19, **characterised in that** the reciprocating rod (7) is rotated by means of a third actuator means (9), preferably a pneumatic actuator.

**21.** An apparatus (A) according to claim 20, **characterised in that** the one or more of the first actuator means (6), the second actuator means (26), and the third actuator means (9) of the reciprocating unit are selected from the group of a pneumatic actuator, a hydraulic actuator, or an electric actuator, or combinations of those.

**22.** An apparatus (A) according to any of claims 19, 20 or 21, **characterised in that** the computer controls at least one of the velocity of the reciprocating rod (7), the rotation of the reciprocating rod (7), the frequency of sampling, opening and closing of the shutter opening (13), and emptying of the sampling unit (4;4').

**23.** An apparatus (A) according to any of the preceding claims 10 - 22, **characterised in that** the apparatus (A) further comprises a second housing (11) in extension of the first housing (5), which second housing (11) accommodates at least the first coupling part (8a), the second coupling part (8b), the first actuator means (6), the second actuator means (26), a length of the reciprocating rod (7), and the computer.

**24.** An apparatus (A) according to claim 23, **characterised in that** the second coupling part (8b) is mounted to a rear wall (17) of the second housing (11) opposite the first housing (5).

**25.** An apparatus (A) according to claims 23 or 24, **characterised in that** the reciprocating rod (7) is arranged to reciprocate through both the first housing (5) and the second housing (11).

**26.** An apparatus (A) according to any of the preceding claims 1 - 25, **characterised in that** the particles (1) are sugar particles.

**27.** An apparatus (A) according to any of the preceding claims 1 - 26, **characterised in that** the particles (19 fall freely.

**28.** An apparatus (A) according to any of the preceding claims 1 -27 for use in a sub-sampling apparatus, **characterised in that** the first housing outlet (20) of a first housing (5) of a first apparatus (A) as defined in claims 1 - 27 is in fluid communication with an inlet of a flow-through unit (2) of a second apparatus (A) as defined in claims 1 - 27, or other device adapted to take a sub-sample from the sample taken by the first apparatus (A).

**29.** A method of performing a sampling cycle using the apparatus (A) according to any of the preceding claims 1 - 28, **characterised in that** the method comprises the cycle of at least steps a) - f) performed under control of the computer when the flow-through unit (2) of the apparatus (A) have been inserted in a section of a pipe, inside which a particle stream (PS) is streaming, preferably streaming in a vertical direction:
a) the computer provides a first shutter command to the second actuator means (26) to make the shutter (3) open the shutter opening (13) to obtain access to the flow through-unit (2),
b) the computer provides a reciprocating command to the first actuator means (6) to make a first stroke part to reciprocate the sampling unit (4;4') at constant velocity out of the first housing (5), crosswise the particle stream (PS), and a second stroke part back again, crosswise the particle stream (PS), inside the first housing (5),
c) the computer provides a second shutter command to the second actuator means (26) to close the shutter opening (13) by means of the shutter (3),
d) the first coupling part (8a) and the second coupling part (8b) couple together in common rotationally interlocking relationship, optionally triggered by a coupling command issued by the computer to the second actuator means (26),
e) the computer provides a first rotation command to the third actuator means (9) to rotate the reciprocating rod (7) to empty the sampling unit (4;4') into the first housing (5), and
f) the computer provides a second rotation command to the third actuator means (9) to reverse or repeat the rotation of step e).

**33.** A method according to claim 32, **characterised in that** the method comprises step g) of repeating steps a) - f) after a predetermined stand-by period, which is known to the computer, has elapsed.
